(19) **Europäisches Patentamt**
**European Patent Office**
**Office européen des brevets**

(11) **EP 3 154 833 B1**

(12) **EUROPÄISCHE PATENTSCHRIFT**

(45) Veröffentlichungstag und Bekanntmachung des Hinweises auf die Patenterteilung:
**24.02.2021 Patentblatt 2021/08**

(21) Anmeldenummer: **15725995.3**

(22) Anmeldetag: **22.05.2015**

(51) Int Cl.:
**B60T 8/172** *(2006.01)*    **B60C 23/06** *(2006.01)*
**B60T 8/1755** *(2006.01)*    **B60W 40/13** *(2012.01)*

(86) Internationale Anmeldenummer:
**PCT/EP2015/001053**

(87) Internationale Veröffentlichungsnummer:
**WO 2015/188916 (17.12.2015 Gazette 2015/50)**

(54) **VERFAHREN ZUM BETRIEB EINES ELEKTRONISCHEN BREMSSYSTEMS**

METHOD FOR OPERATING AN ELECTRONIC BRAKE SYSTEM

PROCÉDÉ DE FONCTIONNEMENT D'UN SYSTÈME DE FREINAGE ÉLECTRONIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.06.2014   DE 102014008562**

(43) Veröffentlichungstag der Anmeldung:
**19.04.2017   Patentblatt 2017/16**

(73) Patentinhaber: **WABCO GmbH**
**30453 Hannover (DE)**

(72) Erfinder:
• **CZAJA, Daniel**
**30419 Hannover (DE)**

• **STENDER, Axel**
**31787 Hameln (DE)**
• **TREICHEL, Thomas**
**10247 Berlin (DE)**
• **WOLF, Markus**
**31137 Hildesheim (DE)**

(74) Vertreter: **Lauerwald, Jörg**
**Wabco GmbH**
**Am Lindener Hafen 21**
**30453 Hannover (DE)**

(56) Entgegenhaltungen:
**EP-A2- 0 918 003      WO-A1-01/70549**
**WO-A1-02/053432      WO-A2-2005/039955**
**DE-A1- 19 904 216      US-B1- 6 498 976**

**Beschreibung**

Die Erfindung betrifft ein Verfahren zum Betrieb eines elektronischen Bremssystems in einem Fahrzeug mit wenigstens zwei Reifen auf einer Achse, wobei das Fahrzeug einen Schwerpunkt SP mit einer Höhe $h_{SP}$ aufweist, wobei die Höhe des Schwerpunkts berechnet und vom elektronischen Bremssystem als Parameter verwendet wird. Weiterhin betrifft die Erfindung ein elektronisches Bremssystem und ein elektronisches Steuergerät zur Durchführung des Verfahrens sowie ein Fahrzeug mit einem elektronischen Steuergerät und/oder Bremssystem.

Nutzfahrzeuge sind typischerweise mit pneumatisch betätigten Bremsen ausgerüstet. Die Ansteuerung erfolgt über zwei Systeme, nämlich vorrangig elektronisch und nachrangig pneumatisch. Aufgrund der elektronischen Ansteuerung wird das System auch als elektronisches Bremssystem EBS bezeichnet.

Die elektronische Ansteuerung führt zu einem deutlich schnelleren Ansprechen der Bremsen als bei der rein pneumatischen Ansteuerung. Dies ermöglicht in Verbindung mit Raddrehzahlsensoren und einem Querbeschleunigungssensor vielfältige Sicherheitsfunktionen, wie eine Antiblockierfunktion und Antischlupfregelung. Möglich ist auch eine Stabilitätskontrolle. Bedingt durch die Beladung können Nutzfahrzeuge einen so hohen Schwerpunkt aufweisen, dass ein Kippen bei Kurvenfahrt auftreten kann. Dies gilt insbesondere für Anhängefahrzeuge. Für die Stabilitätskontrolle sind unter anderem die jeweilige Achslast und die Höhe des Schwerpunkts von Bedeutung. Die Achslast wird bei mechanisch gefederten Fahrzeugen mit Hilfe eines Wegsensors und bei luftgefederten Fahrzeugen über einen Balgdrucksensor und einen Wegsensor ermittelt. Die Höhe des Schwerpunkts kann bislang nur als feste Größe abgeschätzt werden.

WO 01/70549 A1 offenbart einen Fahrdynamikregler oder einer Vorrichtung zur Kippverhinderung. Als Lastsensor ist beispielsweise bei einer Luftfederung auch ein Drucksensor verwendbar, der den Druck innerhalb des Druckbalges der Luftfederung misst und ein der Masse bzw. der Achslast entsprechendes Signal an die Steuerung liefert. Mit Hilfe eines Lenkwinkelsensors kann in alternativer Ausgestaltung der Erfindung die Querbeschleunigung ebenfalls bestimmt werden.

WO 02/053432 A1 offenbart ein System zur Beurteilung des Beladungszustandes eines Kraftfahrzeuges mit wenigstens einem Rad umfaßt wenigstens eine Sensoreinrichtung, welche eine zum Fahrzeuggewicht proportionale Größe erfasst und ein die Größe reprässentierrichtung, welche das die erfasste Größe repräsentierende Signal verarbeitet und nach Massgabe des Ergebnisses der Verarbeitung einen Beladungszustand des Fahrzeugs beurteilt. Es ist die Sensoreinrichtung eine dem wenigstens einen Rad zugeordnete Radkraft-Sensoreinrichtung, welche eine im Wesentlichen zwischen Fahruntergrund und Radaufstandsfläche wirkende Radaufstandskraft des jeweiligen Rades als die zum Fahrzeuggewicht proportionale Größe erfasst.

EP 0 918 003 A2 offenbart ein Verfahren zur Ermittlung einer die Schwerpunktshöhe eines Fahrzeuges beschreibenden Größe. Es wird für wenigstens ein Rad eine die Raddrehzahl beschreibende Größe ermittelt. Für wenigstens ein Rad wird wenigstens in Abhängigkeit der die Raddrehzahl des entsprechenden Rades beschreibenden Größe eine das Radverhalten beschreibende Größe ermittelt. Wenigstens in Abhängigkeit von der für das wenigstens eine Rad ermittelten Größe, die das Radverhalten dieses Rades beschreibt, wird eine die Schwerpunktshöhe des Fahrzeuges beschreibende Größe ermittelt. Das Verfahren zur Ermittlung der die Schwerpunktshöhe eines Fahrzeuges beschreibenden Größe wird im Rahmen eines Verfahrens zur Stabilisierung des Fahrzeuges eingesetzt.

WO 2005/039955 A2 offenbart ein Verfahren zur Kippstabilisierung eines Fahrzeuges in kritischen Fahrsituationen, bei dem ein Kippstabilisierungsalgorithmus in einer kritischen Situation mittels eines Aktuators in den Fahrbetrieb eingreift, um das Fahrzeug zu stabilisieren. Unterschiedliche Beladungszustände des Fahrzeugs können dadurch berücksichtigt werden, dass die Fahrzeugmasse sowie die charakteristische Geschwindigkeit und das Radaufstandskraftverhältnis ermittelt und der Kippstabilisierungsalgorithmus in Abhängigkeit von der Fahrzeugmasse bzw. dem geschätzten Fahrzeugschwerpunkt ausgeführt wird.

DE 199 04 216 A1 offenbart ein Verfahren zum Bestimmen und Erkennen einer Kippgefahr eines Fahrzeugs mittels dynamischer Erkennung von Änderungen des Fahrzeugschwerpunkts. Der Fahrzeugschwerpunkt wird in Abhängigkeit einer Querbeschleunigung oder einer Längsbeschleunigung berechnet. Ermittelt werden jeweils Verschiebungen des Fahrzeugschwerpunkts, beispielsweise durch Messung von Federwegänderungen an den Achsen.

Aufgabe der vorliegenden Erfindung ist die Schaffung eines Verfahrens zum Betrieb eines elektronischen Bremssystems mit der Möglichkeit einer verbesserten Stabilitätskontrolle.

Zur Lösung der Aufgabe weist das erfindungsgemäße Verfahren die Merkmale des Anspruchs 1 auf. Die Höhe $h_{SP}$ des Schwerpunkts SP wird berechnet und vom elektronischen Bremssystem als Parameter verwendet, bzw. als Eingangsgröße für Regelfunktionen. Durch die Verwendung einer berechneten Höhe $h_{SP}$ sind eine genauere Stabilitätskontrolle und die Ausführung anderer Funktionen möglich, die ohne die Berechnung nur mit hohen Sicherheitszuschlägen durchführbar wären.

Die Höhe $h_{SP}$ des Schwerpunkts SP wird in Abhängigkeit von einem Referenzsignal und iterativ bestimmt, wobei sich das Referenzsignal auf einen Parameter bezieht, welcher einerseits unter Verwendung einer angenommenen Höhe des Schwerpunkts berechenbar ist, und welcher andererseits messbar ist oder aus einer Messung ableitbar ist.

Für die Berechnung der Höhe $h_{SP}$ wird unter anderem zurückgegriffen auf aktuelle Messwerte von am Fahrzeug vorhandenen Sensoren. Daraus ergibt sich wenigstens ein durch Messung entstandenes Referenzsignal, welches zur Vereinfachung als das gemessene Referenzsignal bezeichnet wird. Parallel dazu lässt sich das Referenzsignal berechnen, nämlich unter Verwendung eines Schätzwertes für die Höhe $h_{SP}$. Schätzwert der Höhe $h_{SP}$ kann beispielsweise die für das betreffende Fahrzeug größtmögliche Höhe $h_{SP}$ sein. Das unter Verwendung der geschätzten Höhe $h_{SP}$ berechnete Referenzsignal wird dann mit dem gemessenen Referenzsignal verglichen. Je nach Ergebnis des Vergleichs wird eine neue Rechnung durchgeführt unter Verwendung eines anderen Schätzwertes der Höhe hsp. Diese Iteration wird solange durchgeführt, bis das berechnete Referenzsignal mit dem gemessenen Referenzsignal übereinstimmt. Die sich derart ergebende Höhe $h_{SP}$ ist dann die tatsächliche berechnete Höhe $h_{SP}$. Durch die Iteration kann die Höhe des Schwerpunkts relativ genau bestimmt werden. Auch können konstante Offsets/systematische Fehler bestimmt werden. Relevante Parameter (z. B. Reifenparameter) können hinsichtlich ihrer Auswirkung auf das berechnete Ergebnis im Rahmen einer Plausibilitätsprüfung überprüft werden. Zusätzlich können weitere Parameter, die während der Parametrierung und Inbetriebnahme des Fahrzeugs angegeben wurden und die Fahrzeugeigenschaften detaillieren (z.B. Achsanzahl, geometrische Daten, Reifentyp etc.), für die späteren Berechnungen verwendet werden.

Als Referenzsignal wird die Querbeschleunigung $a_{SP}$ verwendet. In dem elektronischen Bremssystem ist typischerweise ein Querbeschleunigungssensor vorhanden, der ein zuverlässiges gemessenes Referenzsignal liefert. Auch besteht ein gut berechenbarer Zusammenhang zwischen der Höhe des Schwerpunkts und der kippkritischen Querbeschleunigung.

Nach einem weiteren Gedanken der Erfindung wird die Höhe $h_{SP}$ des Schwerpunkts SP in Abhängigkeit von einer Differenz von Raddrehzahlen an einem kurveninneren Rad und einem kurvenäußeren Rad bei Kurvenfahrt bestimmt. Dem Verfahren liegt dabei folgende Überlegung zugrunde:

Bei Kurvenfahrt tritt zwischen dem inneren Rad und dem äußeren Rad eine Drehzahldifferenz auf, die theoretisch, also ohne Berücksichtigung einer Last, nur abhängig ist von der Spurweite des Fahrzeugs und vom Radius der gefahrenen Kurve. Der Radius der Kurve ergibt sich mittelbar aus der Geschwindigkeit des Fahrzeugs und der auftretenden Querbeschleunigung. Ein typisches elektronisches Bremssystem weist einen Querbeschleunigungssensor und Raddrehzahlsensoren auf, so dass die theoretische Radgeschwindigkeitsdifferenz aufgrund der Kurvenfahrt aus den Daten vorhandener Sensoren ermittelbar sein sollte.

Die gemessene Radgeschwindigkeitsdifferenz ist jedoch größer als die theoretische Radgeschwindigkeitsdifferenz, weil sich luftbefüllte Reifen bei Kurvenfahrt ungleich verformen. Aufgrund der Last führt die Reifenverformung der äußeren Räder zu einem geringeren wirksamen Reifenradius, während der wirksame Radius der inneren Räder größer wird. Der Effekt ist umso stärker, je höher der Schwerpunkt der Last über den Rädern liegt. Bei im Übrigen konstanten Daten ist somit die Differenz aus gemessener Radgeschwindigkeitsdifferenz und theoretischer Radgeschwindigkeitsdifferenz ein Maß für die Höhe des Schwerpunkts SP.

Nach einem weiteren Gedanken der Erfindung wird die Höhe $h_{SP}$ des Schwerpunkts SP in Abhängigkeit von Spurweite s, Querbeschleunigung $a_{SP}$ und Achslast m bestimmt. Die Spurweite s bezieht sich auf die beiden Reifen bzw. den Abstand von der Mitte des einen Reifens zur Mitte des anderen Reifens und ist konstant. Die auftretende Querbeschleunigung $a_{SP}$ wird vom Querbeschleunigungssensor gemessen. Ebenso ergibt sich die Achslast m aus Daten von vorhandenen Sensoren, etwa aus Daten von einer Fahrzeugfederung zugeordneten Wegsensoren oder Balgdrucksensoren und Wegsensoren einer pneumatischen Federung.

Nach einem weiteren Gedanken der Erfindung wird die Höhe $h_{SP}$ des Schwerpunkts SP in Abhängigkeit von Daten von Sensoren zur Überwachung des Zustands der Reifen bestimmt. Fahrzeuge können mit Sensoren ausgestattet sein, die beispielsweise den Druck und/oder die Temperatur unmittelbar am Reifen messen. Werden die Reifen im Laufe einer Fahrt wärmer, ergibt sich eine Druckerhöhung, so dass die Reifenverformung durch die Last bei Kurvenfahrt geringer wird. Entsprechend verringert sich auch die berechnete Höhe des Schwerpunkts im Laufe einer Fahrt mit zunehmender Erwärmung der Reifen. In Kenntnis der sich ändernden Temperatur und/oder des Drucks kann für die Berechnung der Höhe des Schwerpunkts ein Korrekturfaktor vorgesehen werden, entweder mittels einer Kennlinie oder unter Ergänzung der Berechnung zur Bestimmung der Höhe des Schwerpunkts. Analog gilt dies für eine Verringerung von Temperatur und Druck, etwa durch den Wechsel von einer sonnigen, trockenen Straße auf eine im Schatten liegende, nicht vom Schnee geräumte Straße im Winter.

Bei jeder neuen Kurvenfahrt kann die Höhe des Schwerpunkts neu bestimmt werden. Insbesondere kann eine Mittelwertbildung mit der bisher geltenden Höhe des Schwerpunkts durchgeführt werden. Auch kann eine gewichtete Mittelwertbildung vorgesehen sein, etwa derart, dass der zuletzt ermittelte Wert eine höhere Gewichtung erhält als der zuvor ermittelte Wert.

Nach einem weiteren Gedanken der Erfindung wird die Berechnung der Höhe des Schwerpunkts in Abhängigkeit von bei Kurvenfahrt des Fahrzeugs auftretenden Messwerten durchgeführt. Zuvor wird bei Geradeausfahrt des Fahrzeugs ein systematischer Fehler/ein konstanter Offset der Berechnung bestimmt, insbesondere durch Festlegung eines Referenzsignals auf Null oder auf einen anderen und für die Geradeausfahrt typischen Wert. So ist beispielsweise die Querbeschleunigung bei Geradeausfahrt gleich Null. Ergibt die Messung der Querbeschleunigung bei Geradeausfahrt einen von Null verschiedenen Wert, lässt sich aus dieser Abweichung zum Referenzsignal ein systematischer Fehler/ein konstanter Offset für die weitere Berechnung bestimmen. Gerade die Verwendung der Querbeschleunigung als Referenzsignal ist zur Bestimmung von bei Geradeausfahrt konstanten Offsets/systematischen Fehlern geeignet.

Die Berechnung der Höhe des Schwerpunkts wird vorzugsweise neu gestartet nach Änderungen der Beladung des Fahrzeugs, nach Resets der beteiligten elektronischen Steuergeräte, nach dem Betätigen der Zündung oder des Anlassers des Fahrzeugs und/oder nach anderen für die Berechnung der Höhe des Schwerpunkts relevanten Ereignissen.

Vorzugsweise wird die Berechnung der Höhe des Schwerpunkts nur innerhalb "stabiler" Betriebszustände durchgeführt, beispielsweise nicht beim Bremsen des Fahrzeugs und nur unterhalb definierter, kritischer Werte der Querbeschleunigung.

Das erfindungsgemäße Verfahren ist vorteilhaft verwendbar für alle Zweispurfahrzeuge mit Reifen, Raddrehzahlsensoren, Querbeschleunigungssensor und Achslastsensoren (Wegsensor, Balgdrucksensor), insbesondere Nutzfahrzeuge bzw. Anhängefahrzeuge mit elektronischem Bremssystem. Das Verfahren ist aber auch für PKWs oder andere Fahrzeuge mit hydraulischen Bremsen nutzbar, sofern für das elektronische Bremssystem eine Abschätzung der Höhe des Schwerpunkts benötigt wird.

Gegenstand der Erfindung ist auch ein elektronisches Bremssystem für ein Fahrzeug, insbesondere für ein Anhängefahrzeug. Das elektronische Bremssystem ermittelt die Höhe des Schwerpunkts nach dem voranstehend beschriebenen Verfahren. Vorzugsweise wird dabei vom Bremssystem überprüft, ob unter Berücksichtigung der Höhe des Schwerpunkts ein kritischer Fahrzustand vorliegt, insbesondere soll ein Kippen des Fahrzeugs verhindert werden.

Ebenfalls Gegenstand der Erfindung ist ein elektronisches Steuergerät für die Durchführung des voranstehend beschriebenen Verfahrens, insbesondere ein Bremsensteuergerät. Das Verfahren und die hierfür erforderlichen Parameter können Bestandteil der Software des Steuergerätes sein. Mit dem Bremsensteuergerät werden im Rahmen eines elektronischen Bremssystems z. B. die elektromagnetischen Regelventile von Druckluftbremsen angesteuert.

Schließlich ist Gegenstand der Erfindung auch ein Fahrzeug mit einem elektronischen Steuergerät bzw. mit einem elektronischen Bremssystem, jeweils wie voranstehend erläutert. Das Fahrzeug weist insbesondere Druckluftbremsen, Raddrehzahlsensoren, einen Querbeschleunigungssensor, Wegsensoren und/oder Balgdrucksensoren auf.

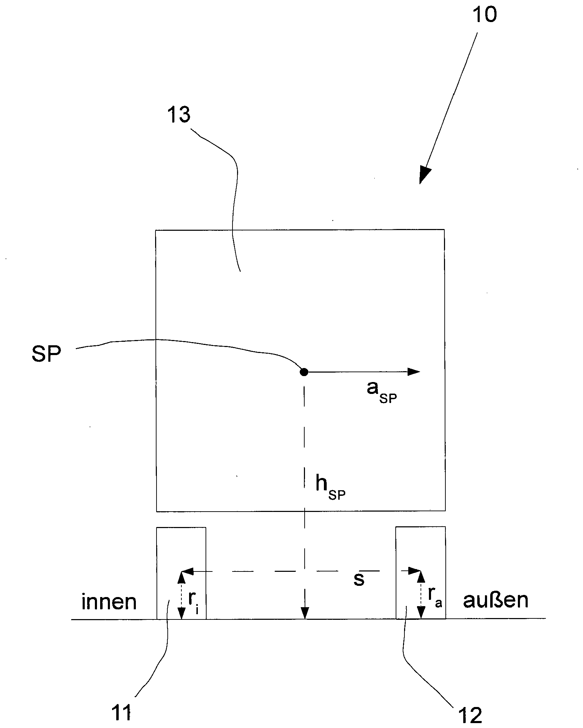

Weitere Merkmale der Erfindung ergeben sich aus der Beschreibung im Übrigen und aus den Ansprüchen. Vorteilhafte Ausführungsbeispiele der Erfindung werden nachfolgend anhand der einzigen Zeichnung erläutert.

Die Figur zeigt eine vereinfachte Rückansicht eines Fahrzeugs 10 mit zwei Hinterrädern 11, 12 und einem kastenförmigen Aufbau 13. Das Fahrzeug 10 kann ein Zugfahrzeug oder ein Anhängefahrzeug sein und ist in an sich bekannter Weise mit Druckluftbremsen, Raddrehzahlsensoren, einem elektronischen Bremssystem, einem Bremsensteuergerät mit Querbeschleunigungssensor und mit Wegsensoren bzw. Balgdrucksensoren zur Bestimmung einer Achslast ausgestattet.

Es wird von einer Kurvenfahrt ausgegangen, mit dem Rad 11 als kurveninnerem Rad und dem Rad 12 als kurvenäußerem Rad. Dabei wirkt auf einen Schwerpunkt SP des Fahrzeugs 10 eine Querbeschleunigung $a_{SP}$. Der Schwerpunkt SP liegt in einer Höhe $h_{SP}$.

Der Schwerpunkt SP wird hier als Ort einer auf die Räder 11, 12 wirksamen Achslast angenommen. Durch die Achslast ist an den Rädern 11, 12 eine Reifenverformung gegeben, welche von der auftretenden Querbeschleunigung $a_{SP}$ abhängt. Der wirksame Reifenradius $r_a$ des kurvenäußeren Rades 12 verringert sich, während der wirksame Reifenradius $r_i$ des kurveninneren Rades 11 etwas zunimmt. Dieser Effekt wird für die Berechnung der Höhe $h_{SP}$ des Schwerpunkts SP genutzt.

Nachfolgend ist ein Berechnungsbeispiel zur Bestimmung der Höhe $h_{SP}$ aus der Reifenverformung und der daraus resultierenden Differenz der Radgeschwindigkeiten während einer Kurvenfahrt wiedergegeben:

- Zu berechnen ist die Schwerpunktshöhe $h_{SP}$ des Fahrzeugs exemplarisch aufgrund der Daten einer Achse

- Gemessene Geschwindigkeit des Fahrzeugs im Schwerpunkt ist $v_{SP} = 11\frac{m}{s}$ (kann aus einem Mittelwert der Radgeschwindigkeiten bestimmt werden, abgeleitet aus den Werten von Raddrehzahlsensoren der betreffenden Achse oder von allen Raddrehzahlsensoren)

- Gemessene Querbeschleunigung bei konstanter Kurvenfahrt ist $a_{SP}$ = 0,15g = 1,47 m/s² (aus den Signalen eines Querbeschleunigungssensors)

- Gemessene Achslast ist m = 7000kg, ermittelt über Wegsensor im Fahrwerk bzw. bei Luftfederung über Balgdruck und Wegsensor, oder ermittelt über Bewertung des Schlupfverhaltens der Räder

- Spurweite ist s =2,0 m (Fahrzeugkonstante bzw. entnommen aus Fahrzeugparametrierung)

- Reifenradius ist $r_0$ = 0,517 m (Messung bei Stillstand oder vom Reifentyp abhängige Konstante oder Basiswert entnommen aus Fahrzeugparametrierung, Feinabgleich und Ermittlung bei Geradeausfahrt über interne Funktionen)

- Reifensteifigkeit ist $C_R = 1/(2,1*10^6)\frac{m}{N}$ (vom Reifentyp abhängige Konstante)

- Bei Kurvenfahrt gemessene Raddifferenzgeschwindigkeit $\Delta V_M$ (außen / innen) = 0,37 m/s

Das Fahrzeug fährt mit 11 m/s. Es wird bei Kurvenfahrt mit einer Querbeschleunigung von 0,15g eine Radgeschwindigkeitsdifferenz $\Delta V_M$ von 0,37m/s zwischen kurveninnerem und kurvenäußerem Rad gemessen.

Die theoretische Radgeschwindigkeitsdifferenz berechnet aus Spurweite und Querbeschleunigung ist $\Delta V_A$ :

$$\Delta V_A = v_{Aa} - v_{Ai} = \frac{a_{SP}}{v_{SP}} \times s \quad = 0,26m/s \qquad \text{(Gleichung 1)}$$

Die Differenz $\Delta V_R$ zwischen theoretischer Radgeschwindigkeitsdifferenz $\Delta V_A$ und gemessener Radgeschwindigkeitsdifferenz $\Delta V_M$ ist hier:

$$\Delta V_R = 0,37m/s - 0,26m/s = 0,11m/s \qquad \text{(Gleichung 2)}$$

Der Grund für die Differenz $\Delta V_R$ ist die Reifenverformung während der Kurvenfahrt, welche zu einer Änderung des Reifenradius führt. Die Reifenverformung wird durch die nach außen gerichtete Fliehkraft aufgrund von Massenträgheit verursacht. Es kommt zu einer Reifenradiusverringerung an den kurveninneren Rädern und zu einer Reifenradiusvergrößerung außen. Je höher Achslast und Schwerpunkt sind, um so stärker ist die Reifenverformung. Reifenverformung und Achslast sind berechenbar bzw. messbar, die Schwerpunktshöhe ist dann berechenbar.

Die Differenz $\Delta V_R$ ergibt sich auch aus den durch Reifenverformung bedingten Geschwindigkeiten der kurvenaußen und kurveninnen gemessenen Radgeschwindigkeiten $v_{Ra}$ und $v_{Ri}$:

$$v_{Ra} - v_{Ri} = \Delta V_R \qquad \text{(Gleichung 3)}$$

Geschwindigkeit (translatorische Radgeschwindigkeit), Reifenradius und Drehzahl sind voneinander abhängig:

$$\Delta V_R = \omega * \Delta r \qquad \text{(Gleichung 4)}$$

$$\omega = \frac{v_{SP}}{r_0} \qquad \text{(Gleichung 5)}$$

Gleichung 4 mit Gleichung 5 ergibt:

$$\frac{1}{2} * \Delta V_R = \left( \frac{v_{SP}}{r_0} * \Delta r \right) * \frac{1}{2} \qquad \text{(Gleichung 6)}$$

und

$$\Delta r = \Delta V_R * \frac{r_0}{v_{SP}} = 0,11\frac{m}{s} * \frac{0,517m}{11\frac{m}{s}} \approx 0,005m \qquad \text{(Gleichung 7)}$$

Die Radiusänderung $\Delta r$ ergibt sich aus Radlaständerung $\Delta F$ und Reifensteifigkeit $C_R$:

$$\Delta r = \frac{\Delta F}{C_R} \qquad \text{mit } C_R = 1/(2{,}1*10^6)\frac{m}{N} \qquad \qquad \text{(Gleichung 8)}$$

Ergibt weiter:

$$\Delta F = \frac{\Delta r}{C_R} = 0{,}005m*2{,}1*10^6\frac{N}{m} = 10500N \qquad \qquad \text{(Gleichung 9)}$$

Die Radlaständerung $\pm\Delta F$ pro Rad an einer Achse ergibt sich aus:

$$\Delta F = \frac{a_{SP}*m*h_{SP}}{s} \qquad \qquad \text{(Gleichung 10)}$$

Daraus folgt die errechnete Schwerpunktshöhe:

$$h_{SP} = \frac{\Delta F*s}{a_{SP}*m} = \frac{10500N*2m}{1{,}47m/s^2*7000kg} \approx 2{,}04m \qquad \qquad \text{(Gleichung 11)}$$

Es kann von einer Schwerpunktshöhe im Bereich von ca. 2m ausgegangen werden. Das Verfahren dient zur Einschätzung der Fahrzeugeigenschaften. Hierbei genügt eine Unterscheidung zwischen einem z.B. ausgeladenen Fahrzeug mit sehr tiefem Schwerpunkt (Stahlplatten geladen), einem Fahrzeug mit sehr hohem Schwerpunkt und dem Mittel dazwischen. Diese Informationen können z.B. Stabilitätsregelungsfunktionen zur Verfügung gestellt werden, die ihre Funktionsweise (z.B. Anregelgrenzen oder Eingriffsintensität) so auf das individuelle Fahrzeug mit Beladung abstimmen können.

Erfindungsgemäß wird die Höhe $h_{SP}$ des Schwerpunkts SP durch Iteration bestimmt. Hierfür wird die Querbeschleunigung $a_{SP}$ verwendet. Gleichung 10 wird nach der Querbeschleunigung $a_{SP}$ aufgelöst. Für die Höhe $h_{SP}$ wird ein Schätzwert angenommen, z. B. ein für das Fahrzeug relativ unwahrscheinlicher hoher Wert von 3,5 m. Die übrigen Werte für F, m und s liegen wie im ersten Ausführungsbeispiel vor. Daraus ergibt sich eine berechnete Querbeschleunigung $a_{SP}$ von 0,857 m/s$^2$ und somit eine deutliche Differenz zu der im ersten Ausführungsbeispiel gemessenen Querbeschleunigung von 1,47 m/s$^2$. In einem nächsten Schritt wird ein niedrigerer Schätzwert der Höhe $h_{SP}$ verwendet, z. B. 3 m. Mit diesem Schätzwert ergibt sich eine berechnete Querbeschleunigung $a_{SP}$ von 1 m/s$^2$. Es besteht immer noch ein deutlicher Unterschied zur gemessenen Querbeschleunigung $a_{SP}$ von 1,47 m/s$^2$. Die Iteration wird deshalb solange durchgeführt, bis die berechnete Querbeschleunigung und die gemessene Querbeschleunigung in etwa übereinstimmen. Der zuletzt verwendete Schätzwert für die Höhe $h_{SP}$ entspricht dann ungefähr der tatsächlichen Höhe des Schwerpunkts.

Zusätzlich kann vor der Berechnung der Höhe des Schwerpunkts eine Kalibrierung durchgeführt werden. Bei Geradeausfahrt des Fahrzeugs tritt keine Querbeschleunigung auf. Wird gleichwohl eine von Null verschiedene Querbeschleunigung gemessen, kann diese Abweichung als systematischer Fehler in die weiteren Berechnungen eingehen. Die Geradeausfahrt kann beispielsweise bestimmt werden durch Vergleich der Messwerte von Raddrehzahlsensoren auf beiden Seiten des Fahrzeugs, auch in Verbindung mit Messwerten von Reifendrucksensoren.

**Patentansprüche**

1. Verfahren zum Betrieb eines elektronischen Bremssystems in einem Fahrzeug (10) mit wenigstens zwei Reifen auf einer Achse, wobei das Fahrzeug einen Schwerpunkt (SP) mit einer Höhe ($h_{SP}$) aufweist, wobei
   die Höhe ($h_{SP}$) des Schwerpunkts (SP) berechnet und vom elektronischen Bremssystem als Parameter verwendet wird, wobei
   die Höhe ($h_{SP}$) des Schwerpunkts (SP) in Abhängigkeit von einem Referenzsignal und iterativ bestimmt wird, wobei sich das Referenzsignal auf einen Parameter bezieht, welcher einerseits unter Verwendung einer angenommenen Höhe ($h_{SP}$) berechenbar ist, und welcher andererseits messbar ist oder aus einer Messung ableitbar ist, wobei als Referenzsignal die Querbeschleunigung ($a_{SP}$) verwendet wird.

2. Verfahren nach Anspruch 1, **dadurch gekennzeichnet, dass** die Höhe ($h_{SP}$) des Schwerpunkts (SP) in Abhängigkeit von einer Differenz von Raddrehzahlen an einem kurveninneren Rad (11) und einem kurvenäußeren Rad (12) bei Kurvenfahrt bestimmt wird.

3. Verfahren nach Anspruch 1 oder 2, **dadurch gekennzeichnet, dass** die Höhe ($h_{SP}$) des Schwerpunkts (SP) in Abhängigkeit von Spurweite (s), Querbeschleunigung ($a_{SP}$) und Achslast (m) bestimmt wird.

4. Verfahren nach Anspruch 1 oder einem der weiteren Ansprüche, **dadurch gekennzeichnet, dass** die Höhe ($h_{SP}$) des Schwerpunkts (SP) in Abhängigkeit von Daten von Sensoren zur Überwachung des Zustands der Reifen bestimmt wird.

5. Verfahren nach Anspruch 1 oder einem der weiteren Ansprüche, **dadurch gekennzeichnet, dass** die Berechnung der Höhe des Schwerpunkts in Abhängigkeit von bei Kurvenfahrt des Fahrzeugs auftretende Messwerten durchgeführt wird, und dass zuvor bei Geradeausfahrt des Fahrzeugs ein systematischer Fehler/ein konstanter Offset der Berechnung bestimmt wird, insbesondere durch Festlegung eines Referenzsignals auf Null oder auf einen anderen bekannten und für die Geradeausfahrt typischen Wert.

6. Elektronisches Bremssystem für ein Fahrzeug (10), mit einer Funktion zur Prüfung, ob ein kritischer Fahrzustand vorliegt, **dadurch gekennzeichnet, dass** für die Prüfung die Höhe ($h_{SP}$) des Schwerpunkts (SP) berücksichtigt und in einem Verfahren nach einem der voranstehenden Ansprüche bestimmt wird.

7. Elektronisches Steuergerät für die Durchführung eines Verfahrens nach einem der Ansprüche 1 bis 5, insbesondere Bremsensteuergerät.

8. Fahrzeug (10) mit einem elektronischen Steuergerät nach Anspruch 7, und/oder mit einem elektronischen Bremssystem nach Anspruch 6.


**Claims**

1. Method for operating an electronic brake system in a vehicle (10) with at least two tyres on one axle, the vehicle having a centre of gravity (SP) at a height ($h_{SP}$), the height ($h_{SP}$) of the centre of gravity (SP) being calculated and being used as a parameter by the electronic brake system, the height ($h_{SP}$) of the centre of gravity (SP) being determined iteratively and in a manner which is dependent on a reference signal, the reference signal relating to a parameter which firstly can be calculated with the use of a presumed height ($h_{SP}$), and which secondly can be measured or can be derived from a measurement,
the lateral acceleration ($a_{SP}$) being used as a reference signal.

2. Method according to Claim 1, **characterized in that** the height ($h_{SP}$) of the centre of gravity (SP) is determined when driving around a bend in a manner which is dependent on a difference of wheel rotational speeds at an inner wheel (11) in the bend and an outer wheel (12) in the bend.

3. Method according to Claim 1 or 2, **characterized in that** the height ($h_{SP}$) of the centre of gravity (SP) is determined in a manner which is dependent on track width (s), lateral acceleration ($a_{SP}$) and axle load (m).

4. Method according to Claim 1 or one of the further claims, **characterized in that** the height ($h_{SP}$) of the centre of gravity (SP) is determined in a manner which is dependent on data of sensors for monitoring the state of the tyres.

5. Method according to Claim 1 or one of the further claims, **characterized in that** the calculation of the height of the centre of gravity is carried out in a manner which is dependent on measured values which occur when the vehicle drives around a bend, and **in that** a systematic error/a constant offset of the calculation is determined previously when the vehicle drives straight ahead, in particular by way of fixing of a reference signal to zero or to another value which is known and is typical for the vehicle driving straight ahead.

6. Electronic brake system for a vehicle (10), with a function for checking whether there is a critical driving state, **characterized in that**, for the check, the height ($h_{SP}$) of the centre of gravity (SP) is taken into consideration and is determined in a method according to one of the preceding claims.

7. Electronic control unit for carrying out a method according to one of Claims 1 to 5, in particular brake control unit.

8. Vehicle (10) with an electronic control unit according to Claim 7, and/or with an electronic brake system according to Claim 6.

**Revendications**

1. Procédé pour faire fonctionner un système de freinage électronique dans un véhicule (10) comprenant au moins deux pneus sur un essieu, le véhicule possédant un centre de gravité (SP) à une hauteur ($h_{SP}$), la hauteur ($h_{SP}$) du centre de gravité (SP) étant calculée et utilisée en tant que paramètre par le système de freinage électronique, la hauteur ($h_{SP}$) du centre de gravité (SP) étant déterminée en fonction d'un signal de référence et de manière itérative, le signal de référence se rapportant à un paramètre qui, d'une part, peut être calculé en utilisant une hauteur ($h_{SP}$) supposée et qui, d'autre part, peut être mesuré ou peut être dérivé d'une mesure, le signal de référence utilisé étant l'accélération transversale ($a_{SP}$).

2. Procédé selon la revendication 1, **caractérisé en ce que** la hauteur ($h_{SP}$) du centre de gravité (SP) est déterminée en fonction d'une différence entre les vitesses de rotation de roue au niveau d'une roue intérieure de virage (11) et d'une roue extérieure de virage (12) lors d'une trajectoire en virage.

3. Procédé selon la revendication 1 ou 2, **caractérisé en ce que** la hauteur ($h_{SP}$) du centre de gravité (SP) est déterminée en fonction de l'écartement de voie (s), de l'accélération transversale ($a_{SP}$) et de la charge d'essieu (m) .

4. Procédé selon la revendication 1 ou l'une des autres revendications, **caractérisé en ce que** la hauteur ($h_{SP}$) du centre de gravité (SP) est déterminée en fonction de données de capteurs servant à surveiller l'état des pneus.

5. Procédé selon la revendication 1 ou l'une des autres revendications, **caractérisé en ce que** le calcul de la hauteur du centre de gravité est effectué en fonction des valeurs mesurées produites pendant la trajectoire en virage du véhicule, et **en ce qu'**une erreur systématique/un décalage constant du calcul est déterminé(e) préalablement lors du déplacement en ligne droite du véhicule, notamment en spécifiant un signal de référence à zéro ou à une autre valeur connue et type pour le déplacement en ligne droite.

6. Système de freinage électronique pour un véhicule (10), comprenant une fonction pour vérifier s'il y a présence d'un état de déplacement critique, **caractérisé en ce que** la hauteur ($h_{SP}$) du centre de gravité (SP) est prise en compte pour la vérification et déterminée dans un procédé selon l'une des revendications précédentes.

7. Contrôleur électronique pour la mise en œuvre d'un procédé selon l'une des revendications 1 à 5, notamment contrôleur de frein.

8. Véhicule (10) équipé d'un contrôleur électronique selon la revendication 7 et/ou d'un système de freinage électronique selon la revendication 6.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0170549 A1
- WO 02053432 A1
- EP 0918003 A2
- WO 2005039955 A2
- DE 19904216 A1